# EUROPÄISCHE PATENTANMELDUNG

(11) **EP 1 840 436 A1**
(43) Veröffentlichungstag der Anmeldung: **03.10.2007**
(21) Anmeldenummer: 06006970.5
(22) Anmeldetag: 31.03.2006
(51) Int. Cl.: F16L 21/02, F16L 17/025

(54) **Kombinierte Dichtung für einen Rohrleitungsfitting**

(71) Anmelder: Hawle Armaturen GmbH, 83395 Freilassing (DE)
(72) Erfinder: Käfer, Manuela, 5310 Mondsee (AT)
(74) Vertreter: Schwabe - Sandmair - Marx

(57) **Zusammenfassung**

Die Erfindung betrifft ein Rohrleitungsfitting-Dichtungssystem mit einer Ringdichtung (1), die aus einem elastischen Dichtmaterial, insbesondere einem Gummimaterial besteht, dadurch gekennzeichnet, dass die Dichtung (1) eine Kombination aus einem O-Ring-Dichtungsabschnitt (2) und einem Lippendichtungsabschnitt (3) umfasst.

## Beschreibung

Die Erfindung betrifft ein Rohrleitungsfitting-Dichtungssystem. Rohrleitungsfittings werden bei der Verbindung von Rohren für den Transport von Gasen oder Flüssigkeiten eingesetzt. Sie bestehen meist aus zwei miteinander verbindbaren Teilen, die zwei zu verkoppelnde Rohrleitungsenden umschließen. In einem der Fittingteile ist dabei eine Dichtung vorgesehen, die zwischen der Innenwand des Fittingteils und dem in das Fittingteil einzusetzenden Rohr abdichtet. Die Dichtungen sind gemäß dem Stand der Technik oft als O-Ring-Dichtungen ausgeführt, wobei auch Dichtsysteme mit mehreren, separaten O-Ring-Dichtungen bekannt sind.

Nachteiligerweise sind solche O-Ring-Dichtungen nicht für alle in Rohren zu führenden Medien gleich gut zur Abdichtung verwendbar. Bei der Montage spezieller Rohrleitungen muss deshalb in manchen Fällen eine Dichtung durch eine geeignetere ausgetauscht werden, die nicht unmittelbar dem Fittingsystem zugeordnet ist. Dabei entstehen Probleme, wenn eine Ersatzdichtung nicht vor Ort vorhanden ist, separat besorgt oder angepasst werden muss.

Es ist eine Aufgabe der vorliegenden Erfindung, die obigen Nachteile des Standes der Technik zu überwinden. Insbesondere soll ein Dichtungssystem bereitgestellt werden, das in jedem Fall eine gute Dichtwirkung entfaltet und zusammen mit dem Fitting für jeden Einsatzfall geeignet zur Verfügung gestellt werden kann.

Diese Aufgabe wird durch ein Rohrleitungsfitting-Dichtsystem gemäß dem Anspruch 1 gelöst. Die Unteransprüche definieren bevorzugte Ausführungsformen der Erfindung.

Bei dem Dichtungssystem gemäß der vorliegenden Erfindung umfasst die Dichtung eine Kombination aus einem O-Ring-Dichtungsabschnitt und einem Lippendichtungsabschnitt.

Mit anderen Worten wird ein kombiniertes Dichtungssystem bereitgestellt, das zwei Dichtungskonzepte in sich vereinigt, nämlich die O-Ring-Abdichtung und die Lippenabdichtung. Vorteilhafterweise wird durch eine solche Kombination dafür gesorgt, dass das Dichtungssystem insgesamt als Einheit sowohl für die Gas- als auch die Flüssigkeitsleitung immer eine ausreichende Dichtfähigkeit hat. Die Kombination der beiden Abschnitte, die eine Art universell einsetzbaren Dichtungssatz ergibt, kann einzeln oder zusammen mit dem Fitting immer so bereitgestellt werden, dass sich ein Austausch als Anpassung an ein bestimmtes geleitetes Fluid erübrigt, wodurch sich Lagerung und Bereitstellung vereinfachen und Kompatibilitätsprobleme vor Ort nicht mehr auftreten. Zu diesem Vorteil und zu der zuverlässigen Abdichtung in jedem Fall kommt noch, dass der Lippendichtungsabschnitt ein Einschieben des Rohres vereinfacht, also die Einschubkräfte verringert werden.

Die Dichtung kann im Rahmen der vorliegenden Erfindung verschiedenste Gestaltungen aufweisen. So kann der O-Ring-Dichtungsabschrnitt mindestens einen, insbesondere zwei oder mehr O-Ring-Dichtungsteile umfassen, und dies gilt auch für den Lippendichtungsabschnitt, der mindestens einen, mindestens zwei oder mehr Lippendichtungsteile aufweisen kann. Eine Ausführungsform der Erfindung umfasst beispielsweise einen O-Ring-Dichtungsteil und zwei Lippendichtungsteile.

Die Lippendichtungsteile des Lippendichtungsabschnittes können erfindungsgemäß nach innen abstehende Lippen aufweisen, die insbesondere zur Lippendichtungs-Stirnseite der Dichtung hin geneigt sind. Ferner ist es erfindungsgemäß möglich, die Lippendichtungsteile des Lippendichtungsabschnittes an der Außenseite der Dichtung so auszugestalten, dass sie dort vorstehende Dichtwülste bilden, die insbesondere die Form von (O-Ring-)Kreisabschnitten haben. Ein solcher Lippendichtungsabschnitt hat an der Außenseite die Vorzüge einfacher O-Ringe; insbesondere können hier die üblichen Sitzflächen verwendet werden. An der Innenseite des Lippendichtungsabschnittes können aber die gewollten Wirkungen von Dichtungslippen realisiert werden, nämlich beispielsweise die sehr gute Abdichtung gegenüber speziellen Medien.

Bei einer Ausführungsform der Erfindung ist die Dichtung eine einteilige bzw. integrale Kombination aus einem O-Ring-Dichtungsabschnitt und einem Lippendichtungsabschnitt. Insbesondere ist die Dichtung hier an allen Stellen aus dem gleichen elastischen Dichtmaterial, speziell einem Gummimaterial hergestellt.

Gemäß einer anderen Ausführungsvariante ist die Dichtung eine mehrteilige Kombination aus einem O-Ring-Dichtungsabschnitt und einem Lippendichtungsabschnitt, wobei natürlich auch Kombinationen von mehreren O-Ring-Dichtungsabschnitten oder mehreren Lippendichtungsabschnitten möglich sind. Die Abschnitte können dabei aus verschiedenen, geeigneten Materialien, aber auch aus dem gleichen Material hergestellt sein. Wenn eine solche mehrteilige Kombination gewählt wird, können die einzelnen Dichtungsabschnitte durch eine Sollbrucheinrichtung miteinander verbunden sein, beispielsweise durch kleine abreißbare Verbindungsstege aus dem Dichtungsmaterial. Die Kombination lässt sich so in einfacher Art und Weise immer gemeinsam bereitstellen und erlaubt dennoch Anpassungen an spezielle Einsatzvarianten vor Ort.

Die Erfindung wird im Weiteren anhand eines Ausführungsbeispiels näher erläutert. Sie kann alle hierin beschriebenen Merkmale einzeln sowie in jedweder Kombination aufweisen. In den beigelegten Zeichnungen zeigen:
- Figur 1: eine perspektivische und geschnittene Darstellung einer erfindungsgemäßen Ringdichtung; und
- Figur 2: eine Ringdichtung im Einbauzustand in einem Rohrleitungsfitting.

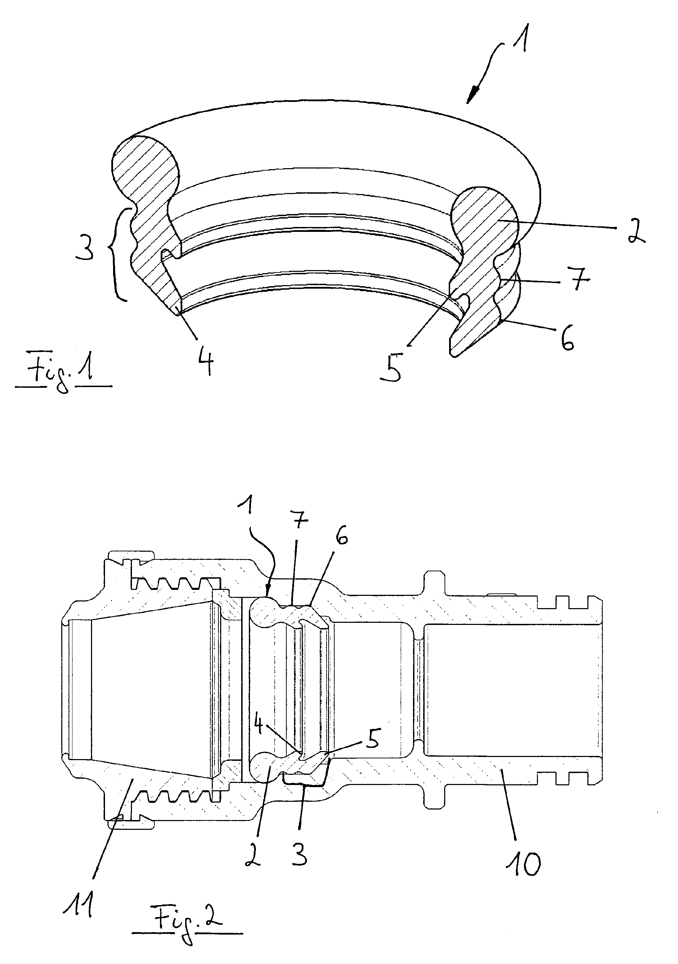

Eine erfindungsgemäße Ausführungsvariante einer Ringdichtung ist in der Figur 1 mit dem Bezugszeichen 1 bezeichnet. Sie weist einen O-Ring-Dichtungsabschnitt auf, der im vorliegenden Fall aus dem O-Ring-Dichtungsteil 2 besteht, der im Weiteren auch einfach als O-Ring 2 bezeichnet wird. An den O-Ring 2 schließt sich der Lippendichtungsabschnitt 3 an, und zwar im vorliegenden Fall in Form einer einteiligen bzw. integralen Einheit aus demselben Material. Der Abschnitt 3 hat zwei nach innen und schräg zur Lippendichtungsabschnitt-Stirnseite der Dichtung 1 hin geneigte Lippen, nämlich eine äußere Lippe 4 und eine innere Lippe 5. Beide Lippen sind im vorliegenden Fall an ihrem Innenumfang, wo die Dichtwirkung ausgeübt wird, abgeflacht (Flächendichtung). An der Außenseite und komplementär gegenüber den Lippen 4, 5 sind runde, insbesondere kreisabschnittsförmige Wülste 6 und 7 ausgebildet, und diese Ausgestaltung bewirkt, dass sich die Ringdichtung 1 an ihrer Außenseite eigentlich so verhält, als bestünde sie aus drei aufeinander folgenden O-Ring-Teilen, insbesondere auch im Bereich des Lippendichtungsabschnittes 3.

Im Einbauzustand ist die Dichtung 1 in der Figur 2 zu sehen, und zwar systemmäßig integriert in einen Rohrleitungsfitting, der aus dem Konusteil 11 und aus dem Gehäuse 10 besteht. Das Konusteil 11 ist zur Herstellung der Verbindung in das Gehäuse 10 einschraubbar. Bevorzugt ist die Dichtung 1 für einen aus den Teilen 10 und 11 bestehenden Kunststofffitting vorgesehen, sie kann aber grundsätzlich auch für Metallvarianten verwendet werden.

In der Figur 2 wird sichtbar, wie die Dichtung 1 außen mit den drei ringförmigen Wülsten in ihrem Sitz an der Innenseite des Gehäuses aufliegt. Wegen der Bereitstellung dieser Form, die an der Außenseite funktionell einfach wie drei nacheinander angeordnete O-Ringe wirkt, kann der Sitz im Gehäuse in sehr einfacher Weise als Flachsitz ausgebildet werden; eine spezielle Anpassung ist nicht notwendig. Auf der Innenseite wirkt die Dichtung in zweifacher Weise, nämlich einmal als O-Ring durch den Dichtungsteil 2 und andererseits als zusätzlich vorgesehene Lippendichtung mit den Lippen 4, 5, so dass für eine gute Abdichtung gegen austretende Flüssigkeiten und/oder Gase in jedem Fall gesorgt ist.

## Patentansprüche

1. Rohrleitungsfitting-Dichtungssystem mit einer Ringdichtung (1), die aus einem elastischen Dichtmaterial, insbesondere einem Gummimaterial besteht, **dadurch gekennzeichnet, dass** die Dichtung (1) eine Kombination aus einem O-Ring-Dichtungsabschnitt (2) und einem Lippendichtungsabschnitt (3) umfasst.

2. Dichtungssystem nach Anspruch 1, **dadurch gekennzeichnet, dass** der O-Ring-Dichtungsabschnitt (2) mindestens einen, insbesondere zwei oder mehr O-Ring-Dichtungsteil(e) umfasst.

3. Dichtungssystem nach Anspruch 1 oder 2, **dadurch gekennzeichnet, dass** der Lippendichtungsabschnitt (3) mindestens einen, insbesondere zwei oder mehr Lippendichtungsteil(e) umfasst.

4. Dichtungssystem nach einem der Ansprüche 1 bis 3, **dadurch gekennzeichnet, dass** die Lippendichtungsteile des Lippendichtungsabschnittes (3) nach innen abstehende Lippen (4, 5) aufweisen, die insbesondere zur Lippendichtungs-Stirnseite der Dichtung (1) hin geneigt sind.

5. Dichtungssystem nach einem der Ansprüche 1 bis 4, **dadurch gekennzeichnet, dass** die Lippendichtungsteile des Lippendichtungsabschnittes (3) nach außen vorstehende Dichtwülste (6, 7) aufweisen, die insbesondere die Form von O-Ring-Kreisabschnitten haben.

6. Dichtungssystem nach einem der Ansprüche 1 bis 5, **dadurch gekennzeichnet, dass** die Dichtung (1) eine einteilige bzw. integrale Kombination aus einem O-Ring-Dichtungsabschnitt (2) und einem Lippendichtungsabschnitt (3) ist.

7. Dichtungssystem nach einem der Ansprüche 1 bis 5, **dadurch gekennzeichnet, dass** die Dichtung eine mehrteilige Kombination aus einem O-Ring-Dichtungsabschnitt (2) und einem Lippendichtungsabschnitt (3) ist.

8. Dichtungssystem nach Anspruch 7, **dadurch gekennzeichnet, dass** der O-Ring-Dichtungsabschnitt (2) und der Lippendichtungsabschnitt (3) durch eine Sollbrucheinrichtung miteinander verbunden sind.
